# EUROPEAN PATENT SPECIFICATION

(11) **EP 3 507 143 B1**
(45) Date of publication and mention of the grant of the patent: **17.02.2021**
(21) Application number: 17752189.5
(22) Date of filing: 20.07.2017
(51) Int. Cl.: B60R 22/02

(54) **DEVICE COOPERATING WITH VEHICLE SAFETY BELT**
MIT EINEM FAHRZEUGSICHERHEITSGURT KOOPERIERENDE VORRICHTUNG
DISPOSITIF COOPÉRANT AVEC UNE CEINTURE DE SÉCURITÉ DE VÉHICULE

(30) Priority: 01.09.2016 PL 41852616
(43) Date of publication of application: 10.07.2019
(73) Proprietor: Luczak, Maciej, 05-082 Babice Stare Zielonki Parcele (PL); Galuszewski, Norbert, 05-083 Borzecin Maly (PL)
(72) Inventor: Luczak, Maciej, 05-082 Babice Stare Zielonki Parcele (PL); Galuszewski, Norbert, 05-083 Borzecin Maly (PL)
(74) Representative: Tyszka, Teresa
(86) International application number: PCT/PL2017/000073
(87) International publication number: WO 2018/044183

(56) References cited:
- EP-A2- 0 810 130
- WO-A1-93/21044
- DE-U1- 20 104 239
- FR-A1- 2 854 364
- US-A- 4 946 198
- US-A- 5 080 396
- US-A- 5 135 257
- US-A- 5 605 380
- US-A1- 2004 104 569

## Description

The subject of this invention is a device cooperating with vehicle safety belt, designed for transport of children in groups II and III, with the weight from 22 kg to 36 kg or of short heighted people.

For car transport of children there are known and most frequently used special arm-chairs fixed to the car seats and equipped with safety belts system.
In Polish patents PL211794 and PL211795 safety belts solutions with adjustable length, crossed on the child's chest and fixed to arm-chair's supports were presented.
In turn, other devices, substituting arm-chair's for transport of children, consist of adjustment of the existing safety belts for adults to children's height.
From the Korean patent KR101574442 a solution is known in which special device is used which shortens the shoulder part of the safety belt and increases the inclination angle. Device is fixed to vertical part of the frame of car seat backrest and contains hooks protruding outwards for the fixing element consisting of a square. One arm of the square is fixed on a selected hook, the other arm has a slit through which the shoulder part of the safety belt passes, adjusted to child's height.

A different solution, known from the American patent application US20160144823, presents a construction of a specially shaped buffer pad, fixed in a mobile way on the lap part of the belt and adhering to child's belly, adjusting the existing safety belt to child's height. As an additional equipment car seat pad is used WO93/21044 A1 is the closest prior art document and discloses the preamble of claim 1.

In accordance with this invention device cooperating with vehicle safety belt, designed for passenger transport, especially children, constitutes a tensioning belt with adjustable length, fixed releasably between shoulder part and a lap part of fastened safety belt through fasteners at the ends of the belt. Most frequently snap fasteners are used. Tensioning belt is equipped with the controller of length and of tension of the belt. Usually, controller has a staple fixing the length of the tensioning belt and a staple blocking its position. In turn, tensioning belt is composed of a fragment connected permanently with the fixing staple and a fragment connected slidingly with fixing staple and staple blocking the position of the belt. Device is fixed on fastened safety belts by placing the tensioning belt and clamping fasteners on the shoulder part and lap part of the safety belt. Then, with the use of the controller, the length and tension of tensioning belt is adjusted to child's height, causing shortening of the shoulder part of the safety belt, supporting the child and increase of the inclination angle of that fragment of the belt vertically.

An essential advantage of the device according to this invention is simple and useful construction, easy to assemble, allowing to eliminate special arm-chairs for transport of children in age groups II and III.

Application of the device results in shortening of the shoulder part of safety belt supporting the child and increase of the inclination angle of that fragment of belt vertically. Due to application of length and tension control of the tensioning belt it is possible to transport safely children and persons with various heights and figure. This solution meets European standards ECE R44 concerning safe transport of children.

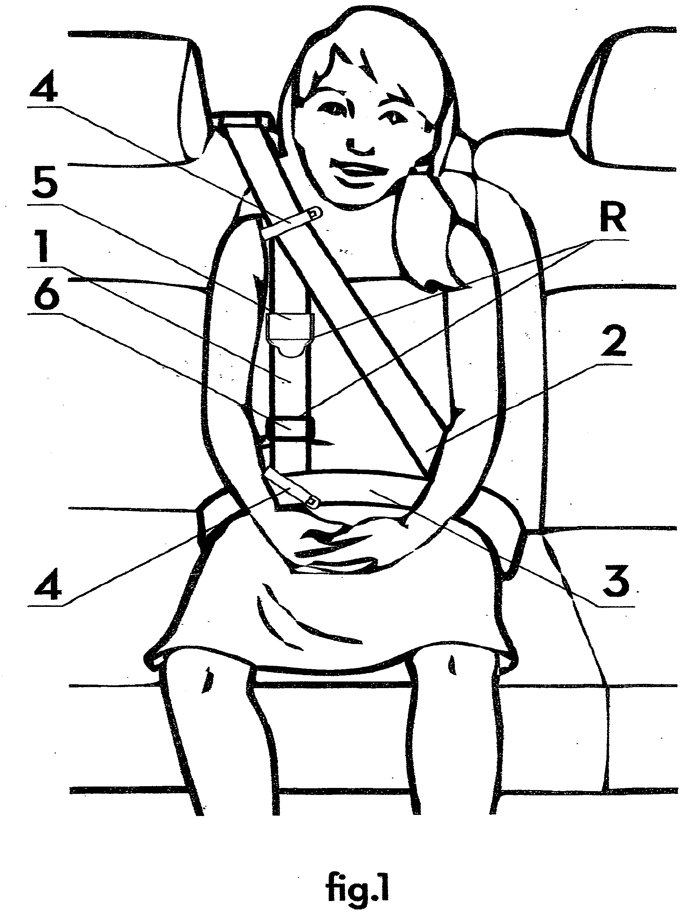

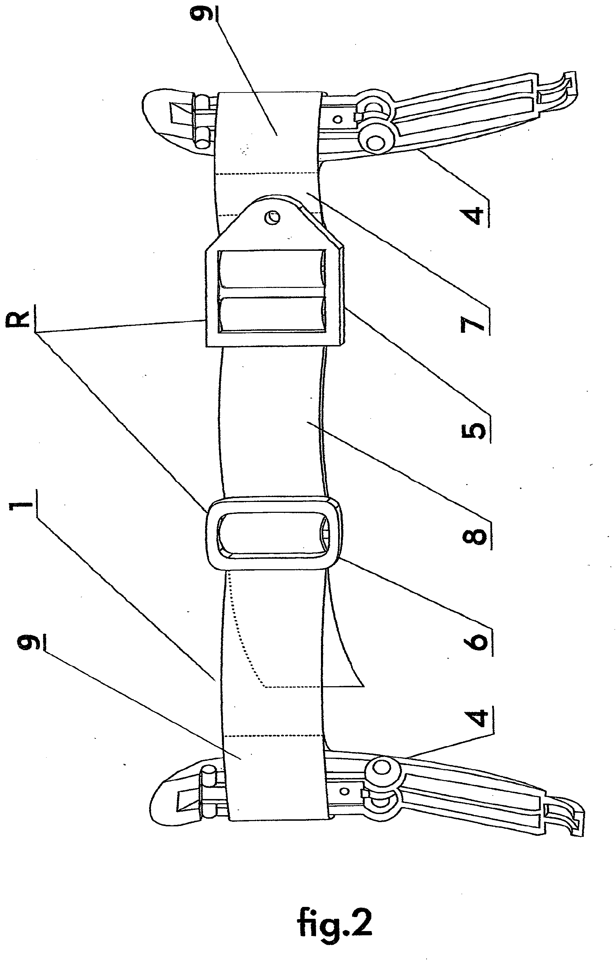

The subject of this invention is explained in more detail on the example of execution on the drawing, where fig. 1 presents the general view of the device cooperating with safety belt supporting the child, and fig. 2 - the general view of the device.

In accordance with the drawing, the device securing the child in a car armchair, cooperating with safety belt, consist of tensioning belt **1** with adjustable length. Belt **1** is fixed releasably between shoulder part **2** and lap part **3** of fastened safety belt through snap fasteners **4** at the ends of the belt **1.** Tensioning belt **1** is equipped with the controller **R** of length and tension. Controller **R** includes a staple **5** fixing the length of the tensioning belt **1** and a staple **6** blocking its position. In turn, tensioning belt **1** is composed of a fragment **7** connected permanently with the fixing staple **5** and a fragment **8** connected slidingly with the fixing staple **5** and staple **6** blocking the position of the belt **1.**

The other ends of fragments **7, 8** of the tensioning belt **1** form a loop for fasteners **4** .

The device is fixed on fastened safety belt by placing the belt **1** and clamping fasteners **4** on the shoulder part **2** and lap part **3** of the safety belt. Then, with the use of the controller **R** the length and tension of the tensioning belt **1** are adjusted to child's height causing shortening of the shoulder part **2** of the safety belt supporting the child and increase of the inclination angle of that fragment of the belt vertically.

## Claims

1. Device cooperating with the vehicle safety belt, designed for passenger transport, especially children, consisting of a tensioning belt fixed releasable with the help of snap fasteners **(4)** between the shoulder part **(2)** and the lap part **(3)** of the fastened safety belt and equipped with a staple **(6)** blocking the position of the belt whereby the tensioning belt **(1)** has: a loop for fasteners **(4)** on both ends in which there are arms of the snap fasteners **(4)** fixed to the fastened safety belt in the shoulder **(2)** part and the lap **(3)** part, **characterized in that** the tensioning belt **(1)** consists of two fragments **(7, 8),** so that one fragment **(7)** is connected permanently with a fixing staple **(5)** and second fragment **(8)** is connected slidingly with the fixing staple **(5)** and the staple **(6)** blocking the position of the belt; and a controller **(R)** consists of the fixing staple **(5)** fixing the length of the tensioning belt **(1)** and a staple **(6)** blocking the position of the belt **(1).**

2. Device according to claim 1 **characterized in that** tunnels **(9)** of the tensioning belt **(1)** are formed by rolled up and fixed ends of the belt **(1).**

## Patentansprüche

1. Mit einem Fahrzeugsicherheitsgurt kooperierende Vorrichtung, entwickelt für die Beförderung von Personen, insbesondere Kindern, bestehend aus Spanngurt, freigebbar befestigt mit Hilfe von Druckknopfverschlüssen **(4)** zwischen dem Schulterteil **(2)** und dem Beckenteil **(3)** des angeschnallten Sicherheitsgurtes, und versehen mit einer Klammer **(6),** die die Position des Gurtes blockiert, wobei der Spanngurt **(1)** eine Schlaufe für Befestigungselemente **(4)** an beiden Enden besitzt, in denen sich die Arme der Druckknopfverschlüsse befinden **(4),** befestigt am angeschnallten Sicherheitsgurt im Schulterteil **(2)** und im Beckenteil **(3), dadurch gekennzeichnet, dass** sich der Spanngurt **(1)** aus zwei Abschnitten zusammensetzt **(7, 8),** sodass ein Abschnitt **(7)** mit einer Befestigungsklammer **(5)** dauerhaft und der andere Abschnitt **(8)** mit der Befestigungsklammer **(5)** sowie der die Position des Gurtes blockierenden Klammer **(6)** gleitend verbunden ist; und einem Regler **(R)** bestehehend aus der Befestigungsklammer **(5),** die die Länge des Spanngurtes **(1)** fixiert und einer Klammer **(6),** die die Position des Gurtes blockiert **(1).**

2. Vorrichtung gemäß Anspruch 1, **dadurch gekennzeichnet, dass** die Tunnels **(9)** des Spanngurtes **(1)** von aufgerollten und befestigten Endstücken des Gurtes geformt sind **(1).**

## Revendications

1. Dispositif coopérant avec une ceinture de sécurité de véhicule, destiné au transport des personnes et des enfants en particulier, constitué d'une ceinture de rétention fixée séparément à l'aide de mandrins à loquet **(4)** au niveau entre l'épaule **(2)** et la hanche **(3)** de la ceinture bouclée, équipé d'une boucle **(6)** bloquant le positionnement de la ceinture, par ailleurs, la ceinture de rétention **(1)** dispose: d'une boucle à loquet **(4)** sur ses deux extrémités, sur lesquelles se trouvent les bras des mandrins à loquet **(4)** qui sont fixes à la ceinture de sécurité bouclée au niveau de l'épaule **(2)** et de la hanche **(3), se caractérise par le fait que** la ceinture de rétention **(1)** composée de deux sections **(7, 8),** grâce à quoi l'une des sections **(7)** est constamment reliée à la boucle de retenue **(5),** tandis que la seconde section **(8)** est reliée de manière coulissante avec la boucle de retenue **(5)** et la boucle **(6)** bloquant le positionnement de la ceinture; et le régulateur **(R)** comporte une boucle **(5)** définissant la longueur de la ceinture de rétention **(1)** et la boucle **(6)** bloquant le positionnement de la ceinture **(1).**

2. D'après la réserve 1, dispositif **se caractérise par le fait que** les tunnels **(9)** de la ceinture **(1)** de rétention sont constitués de par les extrémités repliées et immobilisées de la ceinture **(1).**
